# EUROPÄISCHE PATENTSCHRIFT

(11) **EP 0 441 011 B1**
(45) Veröffentlichungstag und Bekanntmachung des Hinweises auf die Patenterteilung: **06.10.1993**
(21) Anmeldenummer: 90250339.0
(22) Anmeldetag: 22.12.1990
(51) Int. Cl.: C03C 17/36, E04F 13/14

(54) **Fassadenplatte und ihre Verwendung**
Façade panel and its use
Panneau de façade et son utilisation

(30) Priorität: 06.02.1990 DE 4003851
(43) Veröffentlichungstag der Anmeldung: 14.08.1991
(73) Patentinhaber: FLACHGLAS AKTIENGESELLSCHAFT, 90762 Fürth (DE)
(72) Erfinder: Groth, Rolf, Dr., W-4630 Bochum 6 (DE); Nöthe, Axel, Dr., 4620 Castrop-Rauxel (DE)
(74) Vertreter: Goddar, Heinz J., Dr.

(56) Entgegenhaltungen:
- EP-A- 0 041 463
- EP-A- 0 363 747
- DE-U- 8 907 490
- FR-A- 2 096 571
- US-A- 3 712 980
- US-A- 3 944 440
- US-A- 4 773 717

## Beschreibung

Die Erfindung betrifft eine Fassadenplatte, insbesondere zum Verkleiden der Fassade zwischen mit transparenten Glasscheiben, z.B. Isolierglasscheiben, ausgestatteten Fenster-Öffnungen eines Gebäudes zwecks Erzeugung einer in der Außenansicht optisch einheitlichen Glasfassade, mit einem transparenten Glasträger, der auf seiner Rückseite eine die Außenansicht der Fassadenplatte in Reflexion und Farbton an diejenige der transparenten Glasscheiben angleichende Beschichtung mit einer Metalloxidschicht und einer auf diese an der dem Glasträger abgewandten Seite aufgebrachten, im wesentlichen optisch dichten äußeren Schicht aufweist.

Bei der Gestaltung der Fassade von Gebäuden besteht in vielen Fällen das Bedürfnis, im nicht-lichtdurchlässigen Fassadenbereich, also zwischen den Fensteröffnungen, als Außenelemente Fassadenplatten, insbesondere beschichtete Glasscheiben, einzusetzen, welche in Helligkeit und Farbe der Außenansicht harmonisch auf den Fensterbereich abgestimmt sind. Meistens wird dabei eine weitgehende Übereinstimmung zwischen Fenster- und Brüstungsbereich angestrebt, um auf diese Weise eine Glasfassade mit einheitlichem Aussehen zu erhalten.

Im Fensterbereich werden dabei Einfachscheiben oder Isolierglas unter Verwendung von normalen oder auch in der Masse eingefärbten Glasscheiben eingesetzt. Zum anderen werden auch beschichtete Scheiben verwendet, wenn die Wärme- oder Sonnenschutzwirkung verbessert werden soll. Dafür eignen sich vor allem halbtransparente Metallschichten, z. B. aus Gold und Silber, welche häufig mit zusätzlichen Interferenzschichten zu einem Mehrschichtsystem kombiniert werden. Mit solchen Mehrschichtsystemen ist es möglich, sehr gute technische Werte hinsichtlich des Wärme- oder Sonnenschutzes zu erhalten und gleichzeitig in der Außenansicht eine unerwünschte Spiegelwirkung solcher Scheiben zu verhindern. Wegen ihrer Kratzempfindlichkeit und der Gefahr von Schichtveränderungen durch Einwirkung der Außenatmosphäre werden derartige Beschichtungen im allgemeinen in Verbindung mit Isolierglas mit hermetischem Randverbund der einzelnen Scheiben eingesetzt.

In vielen Anwendungsfällen ist es nämlich erwünscht, daß die Lichtreflexion nach außen nicht zu hoch ist, um eine unerwünschte Blendung auszuschalten. Das gilt z. B. für Innenstädte mit hoher Bebauungsdichte, wobei meistens, um den Altstadtcharakter nicht zu stören, auch intensive Färbungen für diese Scheiben unerwünscht sind.

Um Blendung weitgehend auszuschalten, sollte die Lichtreflexion im allgemeinen Werte von etwa 25 % nicht überschreiten. Diese Forderung wird von üblichen Isolierglas erfüllt. So beträgt die Lichtreflexion einer Einfachscheibe aus klarem Glas etwa 8 %, einer Zweifachscheibe aus klarem Glas etwa 14 bis 15 %, die einer Dreifachscheibe etwa 20 %. Bei Verwendung von in der Masse eingefärbten Gläsern sind die entsprechenden Werte niedriger.

Um eine Anpassung des nicht-transparenten an den Fensterbereich zu erhalten, ist es bereits bekannt, dort Isolierglasscheiben gleichen Aufbaus wie im Fensterbereich einzusetzen, wobei jedoch zusätzlich auf die dem Gebäudeinneren zugewandte Scheibe eine lichtundurchlässige Email- oder Farbschicht aufgebracht wird, um den störenden Durchblick auf hinter dem betreffenden Fassadenelement liegende Wandelemente zu verhindern. Derartige Lösungen sind im Hinblick auf eine optisch einheitliche Glasfassade voll befriedigend. Allerdings sind die Kosten sehr hoch, weil auch im nicht-transparenten Fassadenbereich Isolierglas eingesetzt werden muß. Hinzu kommen wegen der Absorption der zusätzlichen undurchlässigen Beschichtung auf der Innenscheibe beträchtliche Erwärmungseffekte derartiger Fassadenelemente bei Sonneneinstrahlung. Sie sind bei Verwendung von Isolierglas aus klarem Glas, welches für Sonnenstrahlung eine sehr hohe Durchlässigkeit aufweist, so hoch, daß bei nicht-hinterlüfteten Fassadenplatten Temperaturen oberhalb 80 °C auftreten können, welche die Belastungsfähigkeit des Randverbundes übersteigen und damit zur Zerstörung der Isolierglasscheibe führen würden. Aber auch bei Scheiben, bei denen die äußere Scheibe eine Sonnenschutzwirkung aufweist und damit die Belastung der inneren Scheibe reduziert wird, ergibt sich eine beträchtliche zusätzliche Belastung, welche die Lebensdauer des Isolierglases beeinträchtigt. Hinzu kommt, daß, um Hitzesprünge zu vermeiden, das Glas vorgespannt werden muß, wodurch zusätzliche Kosten entstehen.

Es ist ferner bereits bekannt, für den nicht-transparenten Fassadenbereich monolithische Glasscheiben einzusetzen, die auf der Außenseite eine Oxidschicht, wie z. B. Titanoxid, als Interferenzschicht aufweisen (vgl. DE-PS 26 46 513). Bei derartigen Fassadenplatten ist die Rückseite mit einem undurchsichtigen Email oder einem Lack versehen, um den Durchblick auf hinter der Fassadenplatte liegende Gebäudeteile zu verhindern. Ein großer Nachteil derartiger monolithischer Fassadenplatten besteht darin, daß die Reinigung der Außenseite der Fassadenplatte mit einem erheblichen Aufwand verbunden ist. Festhaftende Verschmutzungen sind sehr schwierig zu entfernen, da in solchen Fällen Reinigungsverfahren, wie sie für unbeschichtetes Glas üblich sind, nämlich Einsatz abrasiver Mittel, Verwendung von Stahlklingen etc., nicht angewendet werden können, weil dies zu Verkratzungen der Oxid-Schicht führt. Hinzu kommt, daß die genannten Oxid-Interferenzschichten mit einer Lichtreflexion oberhalb von 30 % zu hoch reflektieren, um eine Anpassung des nicht-transparenten Fassadenbereichs an den Fensterbereich entsprechend den obengenannten Forderungen (niedrige Lichtreflexion) durchführen zu können.

Die Schwierigkeiten, welche bei der Reinigung einer Fassadenplatte gemäß DE-PS 26 46 513 auftreten, werden bei einer Fassadenplatte der gattungsgemäßen Art, wie sie aus der US-PS 3 951 525 vorbekannt ist, dadurch vermieden, daß sie wie die transparenten Glasscheiben des dortigen Fensterbereiches auf ihrer Rückseite mit einer reflektierenden Metalloxidschicht versehen sind; die Metalloxidschicht ist dabei unmittelbar auf den Glasträger aufgebracht. Um eine Anpassung der Außenansicht von Fenster- und Brüstungsbereich zu erhalten, wird in beiden Bereichen die gleiche Metalloxid-Beschichtung verwendet, wobei Material und Dicke der Metalloxidschicht so gewählt sind, daß im Fensterbereich eine Sonnenschutzwirkung auftritt. Die Fassadenplatten weisen auf der Metalloxidschicht zusätzlich eine undurchsichtige äußere Schicht aus Email auf mit der bereits zuvor beschriebenen Aufgabe, den Durchblick auf dahinterliegende Gebäudeteile zu verhindern. Weil die Anordnung einer Emailschicht unmittelbar auf der reflektierenden Metalloxidschicht aber zur Folge hat, daß die Anpassung an die im Fensterbereich eingesetzten Glasscheiben mit an Luft angrenzender Metalloxidschicht verschlechtert wird, soll gemäß der Lehre der US-PS 3 951 525 eine Kompensation zumindestens teilweise dadurch erreicht werden, daß die Farbe und das Material der verwendeten äußeren Emailschicht geeignet gewählt werden. Mit diesem Verfahren ist eine ästhetisch zufriedenstellende Anpassung zwischen Fenster und Fassadenplatte nicht erreichbar. Im Unterschied zur Metalloxidschicht mit gerichteter Reflexion reflektieren solche Emailschichten diffus; d. h., der Grad der Anpassung hängt von der sich örtlich und zeitlich ändernden Zusammensetzung des einfallenden Himmelslichtes ab.

Zum Zweck der Abdunkelung ist es auch bekannt, im nichttransparenten Fassadenbereich zusätzlich auf die rückseitige teildurchlässige Beschichtung undurchsichtige Lacke oder eingefärbte Folien aufzubringen. Wegen der unterschiedlichen Reflexion an den Grenzflächen Metalloxidschicht - Luft im Fensterbereich und Metalloxidschicht-Lack/eingefärbte Folie im nichttransparenten Fassadenbereich ergibt sich wie bei der Verwendung eines Emails eine nicht vollbefriedigende Übereinstimmung im Farbton und in der Reflexion. Außerdem sind diese Abdunkelungsschichten der Einwirkung von Licht und UV-Strahlung durch die Glasscheibe und die teildurchlässige Metalloxidschicht hindurch ausgesetzt, was insbesondere bei Lacken und Kunststoffolien zu mangelhafter Alterungsbeständigkeit führen kann. Hinzu kommt, daß das Aufbringen einer zusätzlichen Abdunkelungsschicht auf die in der Regel pyrolytisch oder mittels Vakuumbeschichtungsverfahren aufgebrachte Metalloxidschicht aufwendig ist.

Die vorbekannten Fassadenplatten sind insbesondere für den hinsichtlich Höhe und Farbton der Lichtreflexion anzupassenden Brüstungsbereich dann nicht geeignet, wenn im Fensterbereich eine Verglasung aus Klarglas, lichtabsorbierendem Glas oder transmissionsmindernd beschichteten Scheiben mit je nach Scheibenkombination unterschiedlicher, jedenfalls aber niedriger Lichtreflexion und schwacher Färbung eingesetzt wird. Mit den genannten Schichtsystemen ist es zwar grundsätzlich möglich, eine weitgehend farbneutrale Außenansicht solcher Scheiben zu erreichen, es verbleibt jedoch stets ein geringfügiger Farbstich. Dieser ist in einem Gebäude, das ausschließlich mit gleichartigen Scheiben verglast ist, nicht immer zu erkennen. Werden jedoch entsprechende Fassadenplatten für eine Ganzglasfassade eingesetzt, so müssen sie in der Lichtreflexion und im Farbton sehr genau mit den transparenten Glasscheiben im Fensterbereich übereinstimmen. Das menschliche Auge ist nämlich in der Lage, bei einem unmittelbaren Vergleich nebeneinander eingebauter Scheiben auch geringfügige Farbnuancen oder Reflexionsgradabweichungen zu erkennen. Das führt dann zu einem uneinheitlichen Gesamtbild einer solchen Ganzglasfassade.

Der Erfindung liegt dementsprechend die Aufgabe zugrunde, eine monolithische Fassadenplatte der eingangs genannten Art zu schaffen, welche bei wirtschaftlicher Herstellung einen störenden Durchblick auf hinter der Fassadenplatte liegende Wandelemente verhindert, wobei durch einfache und wenig aufwendige Maßnahmen einer Helligkeits- und Farbanpassung an eine Vielzahl von im Fensterbereich eingesetzten Scheiben mit niedriger Lichtreflexion durchführbar sein soll. Farblich handelt es sich dabei um eine Anpassung an eine Außenansicht, die weitgehend neutral ist, wobei aber auch eine Außenansicht, welche einen erkennbar gedämpften Farbton, z. B. in Richtung Bronze, aufweist, in Verbindung mit den genannten Anwendungen manchmal erwünscht ist, jedoch unter Ausschluß auffallender Farben, d. h. Farben mit hoher Farbsättigung.

Erfindungsgemäß wird diese Aufgabe dadurch gelöst, daß auf den Glasträger eine als lichtdurchlässige Metall- oder Metallegierungsschicht ausgebildete innere Schicht solcher Dicke aufgebracht ist, daß sie die Lichtdurchlässigkeit des mit ihr beschichteten Glasträgers gegenüber dem unbeschichteten Glasträger um 30 % bis 85 % reduziert; daß die an die innere Schicht anschließende Metalloxidschicht als dielektrische Schicht aus mindestens einem Metalloxid ausgebildet ist und eine optische Dicke im Bereich vom 60 nm bis 180 nm hat; daß die äußere Schicht als derartige Metall- oder Metallegierungsschicht ausgebildet ist, daß die Lichtdurchlässigkeit des fertig beschichteten Glasträgers < 5 % ist und seine Lichtreflexion in der Außenansicht im Bereich von 8 bis 25 % liegt; und daß die für die innere Schicht und die äußere Schicht verwendeten Metalle derart ausgewählt sind, daß das Verhältnis n/k von Realteil n und Imaginärteil k des komplexen Brechungsindexes dieser Schichten zwischen 0,2 und 5 liegt.

Die Fassadenplatte nach der Erfindung kann durch eine derartige Dicke der inneren Schicht gekennzeichnet sein, daß sie die Lichtdurchlässigkeit des mit ihr beschichteten Glasträgers gegenüber dem unbeschichteten Glasträger um 40 % bis 85 % reduziert.

Ferner kann die Fassadenplatte nach der Erfindung dadurch gekennzeichnet sein, daß die optische Dicke der Metalloxidschicht im Bereich von 70 nm bis 140 nm liegt.

Nach der Erfindung kann vorgesehen sein, daß das Material der inneren und/oder der äußeren Schicht zumindest einen überwiegenden Gehalt an mindestens einem Metall oder einer Metallegierung aus der Gruppe der Elemente mit den Ordnungszahlen 22 - 28 und 30 des Periodensystems aufweist.

Die Erfindung sieht auch vor, daß das Material der inneren Schicht und/oder der äußeren Schicht zumindest einen überwiegenden Gehalt an mindestens einem Metall oder einer Metallegierung aus der Gruppe Chrom, Nickel, Eisen und Titan aufweist.

Dabei schlägt die Erfindung insbesondere vor, daß die innere Schicht und/oder die äußere Schicht aus Chrom besteht.

Eine weitere Ausführungsform der Erfindung ist dadurch gekennzeichnet, daß die innere Schicht und/oder die äußere Schicht aus Edelstahl besteht.

Bei der Fassadenplatte nach der Erfindung kann auch vorgesehen sein, daß die Metalloxidschicht aus SnO₂, ZnO, In₂O₃, TiO₂ oder Mischoxiden der entsprechenden Metalle besteht.

Weiterhin kann vorgesehen sein, daß sie zwischen der Metalloxidschicht und der äußeren Schicht eine 2 - 10 nm dicke Haftschicht, insbesondere aus einer Chromnickellegierung oder aus gegebenenfalls dotiertem In₂O₃ aufweist.

Bevorzugt eignet sich die Fassadenplatte nach der Erfindung, zum Aufbau einer Glasfassade, bei der im Fensterbereich transparente Glasscheiben mit niedriger Lichtreflexion und schwachen Farbton in der Außenansicht eingesetzt sind.

Durch das Zusammenspiel der erfindungsgemäß vorgeschlagenen Schichten gelingt es überraschenderweise, auf wirtschaftliche Weise die gewünschten optischen Eigenschaften genau und reproduzierbar einzustellen.

Fassadenplatten nach der Erfindung lassen sich in besonders vorteilhafter Weise dadurch herstellen, daß die Schichten im Vakuum nach dem Verfahren der MAGNETRON-Kathodenzerstäubung aufgebracht werden. Dieses Verfahren ermöglicht bei Einsatz von Durchlaufanlagen besonders wirtschaftlich die Beschichtung großer Glasflächen. Dabei erfolgt die Herstellung der Metalloxidschicht besonders vorteilhaft durch reaktive MAGNETRON-Kathodenzerstäubung unter Verwendung von metallischen oder Legierungstargets in einer sauerstoffhaltigen Atmosphäre. Die innere und die äußere Schicht werden durch entsprechende Zerstäubung in einer sauerstoffreien Atmosphäre aufgebracht, wobei es allerdings vorteilhaft sein kann, der Beschichtungsatmosphäre für geringfügige Modifikationen der optischen Schichteigenschaften kleine Mengen an Sauerstoff zuzusetzen. Es hat sich gezeigt, daß das erfindungsgemäße Schichtsystem besonders geeignet ist, um in Verbindung mit der MAGNETRON-Kathodenzerstäubung in Durchlaufanlagen in der Außenansicht unterschiedlich angepaßte Fassadenplatten in wirtschaftlicher Weise herzustellen. Eine entsprechende Vielfalt an Fassadenplatten mit Anpassung an unterschiedliche Scheiben im Fensterbereich kann nämlich erhalten werden, indem lediglich die Schichtdicken der Teilschichten unter Verwendung der gleichen Materialien angepaßt werden. Das bedeutet, daß man eine große Produktpalette mit Nuancierungen in der Farbe und der Lichtreflexion herstellen kann, ohne daß die Targetmaterialien gewechselt werden müssen. Letzteres ist bekanntlich bei solchen Durchlaufanlagen mit einem erheblichen Aufwand verbunden, weil für einen Targetwechsel die Anlage belüftet werden muß und das Wiedererreichen der für die Beschichtung erforderlichen Vakuum-Bedingungen einen erheblichen Zeitaufwand erfordert.

Erfindungsgemäß werden die innere Schicht und die äußere Schicht aus Metallen hergestellt, bei denen das Verhältnis von Real- zu Imaginärteil n/k des komplexen Brechungsindex n-ik im sichtbaren Spektralbereich zwischen 0,2 und 5 liegt. Bevorzugt sind dabei solche Metalle, bei denen n und k annähernd gleich groß sind. Diese Materialien reflektieren nämlich im Bereich des sichtbaren Lichtes nur mäßig stark und dabei annähernd farbneutral. Sie ermöglichen damit in optimaler Weise die Lösung der Erfindungsaufgabe.

Als Material für die Herstellung der inneren und der äußeren Schicht hat sich insbesondere Chrom als geeignet erwiesen. Für die Herstellung der dielektrischen Metalloxid-Schicht sind insbesondere SnO₂, ZnO, In₂O₃, TiO₂ oder Mischoxide der entsprechenden Metalle geeignet, welche sich besonders wirtschaftlich durch reaktive MAGNETRON-Zerstäubung herstellen lassen.

Es liegt im Rahmen der Erfindung, anstelle der Metalloxidschicht zwei oder mehr Teilschichten aus verschiedenen Metalloxiden vorzusehen, deren optische Gesamtdicke im für die Metalloxidschicht beanspruchten Bereich liegt. Bei der Herstellung des erfindungsgemäßen Schichtsystems mittels Magnetron-Kathodenzerstäubung hat es sich darüberhinaus als vorteilhaft erwiesen, auf der Metalloxidschicht eine dünne Schicht aus gegebenenfalls dotiertem Indiumoxid anzuordnen. Hierdurch läßt sich die Haftung der äußeren Schicht zum Teil wesentlich verbessern, wenn die Metalloxidschicht zum Beispiel aus SnO₂ besteht. Die optische Dicke der Metalloxidschicht ist in diesem Fall entsprechend zu reduzieren.

Auf die Beschichtung braucht keine zusätzliche Abdunkelungsschicht aufgebracht zu werden, z. B. in Form eines eingefärbten Lackes oder einer aufgeklebten, dunkel eingefärbten Folie, z. B. aus Polyester oder Polyethylen. Es liegt allerdings im Rahmen der Erfindung, die Schichtseite der Glasscheibe beispielsweise zum Schutz vor Beschädigungen beim Transport oder beim Einbau zusätzlich wie üblich mit einer - organischen - Schutzschicht oder Schutzfolie abzudecken. Die Beschichtung hat langzeitig eine ausreichende Beständigkeit gegenüber der Einwirkung der Atmosphäre, wobei insbesondere die Feuchtigkeitsbeständigkeit von Bedeutung ist, weil sich auf der Innenseite derartiger Fassenplatten häufig Wasserkondensat abscheidet. Es hat sich überraschenderweise gezeigt, daß die erfindungsgemäß vorgesehenen äußeren Metall- bzw. Metallegierungsschichten der Gesamtbeschichtung die erforderliche Korrosionsbeständigkeit gegenüber Einflüssen der Umgebungsluft, insbesondere Wasserkondensatfilmen, verleihen, ohne daß noch eine zusätzliche Schutzschicht notwendig wäre. Dies ist gänzlich unerwartet, weil durch reaktive MAGNETRON-Kathodenzerstäubung hergestellte Metalloxidschichten der erfindungsgemäß vorgesehenen Art als solche keineswegs die notwendige Feuchtraumbeständigkeit aufweisen. Setzt man z. B. SnO₂-Schichten einem Feuchtraumtest bei 40°C und 100 % relativer Luftfeuchtigkeit aus, so zeigt sich bereits nach etwa 60 Stunden beginnende Korrosion. Nach 150 Stunden hat sich die Beschichtung großflächig abgelöst. Ein entsprechender Test bei 70° C führt bereits nach 60 Stunden Einwirkungszeit zu großflächigen Schichtablösungen. Ein ähnliches Verhalten zeigen auch die anderen erfindungsgemäß beanspruchten Metalloxidschichten.

Bei dem erfindungsgemäßen Schichtsystem ergibt sich demgegenüber eine ganz erhebliche Verbesserung der Feuchtraumbeständikeit. So konnten nach 2000 Stunden bei 70°C und 100 % relativer Luftfeuchtigkeit noch keine Schichtveränderungen festgestellt werden. Diese hohe Korrosionsbeständigkeit ist überraschend; denn man wird erwarten, daß zumindest über die immer vorhandenen "pinholes" in der Metall- bzw. Metallegierungsschicht Feuchtigkeit eindiffundiert und die darunterliegende feuchtigkeitsempfindliche Metalloxidschicht angegriffen und unterwandert wird, so daß es in diesen Bereichen zu Schichtablösungen kommt. Diese hohe Korrosionsbeständigkeit der Beschichtung ist insbesondere auch deswegen überraschend, weil unter den genannten Testbedingungen das für solche Anwendungen üblicherweise eingesetzte Natron-Kalk-Silikatglas selbst nicht mehr korrosionsbeständig ist. So zeigt sich bei 70°C und 100 % relativer Luftfeuchtigkeit bereits beginnende Oberflächenkorrosion des unbeschichteten Glases nach 200 Stunden Einwirkungszeit.

Durch die erfindungsgemäße Beschichtung wird damit die Korrosionsbeständigkeit des Glasträgers um mehr als eine Zehnerpotenz verbessert. Das ist ein sehr wichtiges Kriterium für den Einsatz solcher Fassadenplatten, insbesondere dann, wenn sich zwischen der Fassadenplatte und dahinterliegendem Isolationsmaterial ein Luftzwischenraum befindet, der nicht vollständig hinterlüftet ist. Unter solchen Bedingungen reicht die Korrosionsbeständigkeit von üblichem Natron-Kalk-Silikatglas nicht aus, um langzeitig eine Korrosion der Glasoberfläche zu verhindern.

Nachstehend ist die Erfindung anhand von Ausführungsbeispielen unter Bezugnahme auf die schematische Zeichnung im einzelnen erläutert.

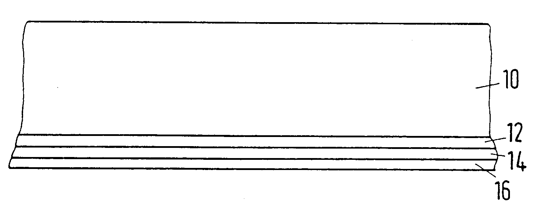

Dabei zeigt die aus einer einzigen Figur bestehende Zeichnung eine Fassadenplatte nach der Erfindung im Schnitt senkrecht zur Scheibenebene.

Wie die Zeichnung erkennen läßt, weist die Fassadenplatte nach der Erfindung einen transparenten Glasträger 10 aus Natron-Kalk-Silikatglas, eine darauf durch MAGNETRON-Kathodenzerstäubung aufgebrachte innere Schicht 12, eine daran anschließende Metalloxidschicht 14, bestehend aus SnO₂ und einer mit SnO₂ dotierten In₂O₃-Haftschicht und eine darauf folgende äußere Schicht 16 auf, die wie die innere Schicht 12 aus Chrom besteht und wie diese durch MAGNETRON-Kathodenzerstänbung hergestellt ist. Auch die Metalloxidschicht 14 ist durch MAGNETRON-Kathodenzerstäubung hergestellt, und zwar reaktiv unter Verwendung von metallischen Targets in sauerstoffhaltiger Atmosphäre. Beim Aufbau einer Ganzglasfassade wird die in der Zeichnung schematisch dargestellte Fassadenplatte so angeordnet, daß die den Schichten 12, 14, 16 abgewandte Außenseite des Glasträgers 10 der Atmosphäre zugewandt ist.

Fassadenplatten nach der Erfindung lassen sich nach den nachstehend beschriebenen Ausführungsbeispielen herstellen.

### Beispiel I

In einer Vakuum-Beschichtungsanlage, welche mit Beschichtungseinrichtungen für MAGNETRON-Kathodenzerstäubung ausgerüstet war, wurden auf eine Floatglasscheibe aus Natron-Kalk-Silikatglas von 4 mm Dicke im Format 40 cm x 40 cm nacheinander folgende Schichten aufgebracht:
- Eine Chrom-Schicht durch Zerstäubung eines Chromtargets in Argon-Atmosphäre bei einem Druck von 1.3 · 10⁻¹ in einer solchen Dicke, daß die Lichtdurchlässigkeit der Floatglasscheibe um 76 % reduziert wurde;
- eine SnO₂-Schicht in einer Dicke von 60 nm durch reaktive Zerstäubung eines Zinntargets in Argon-Sauerstoffatmosphäre bei einem Druck von 3,5 · 10⁻¹ Pa;
- eine mit SnO₂ dotierte In₂O₃-Schicht in einer Dicke von 4nm durch reaktive Zerstäubung eines In90/Sn10-Targets unter den gleichen Bedingungen wie bei der SnO₂-Schicht; und
- eine Chromschicht unter den gleichen Bedingungen wie bei der ersten Schicht in einer Dicke, daß die Lichtdurchlässigkeit der mit allen vier Schichten versehenen Floatglasscheibe < 1 % war.

Die beschichtete Scheibe wies bei Betrachtung von der Glasseite eine Lichtreflexion von 14 % auf. Sie war ohne erkennbaren Farbstich. Die Farborte in Reflexion, gemessen im L, a, b-Farbsystem (nach R.S. Hunter, Photoelectric Color Difference Meter, in J. Opt. Soc. Am. 48 (1958), S. 985 - 955) lagen bei a = -1,0 und b = - 0,8.

In der Außenansicht, d. h. bei Betrachtung von der Glasseite, stimmte die Scheibe im Reflexionsvermögen und im Farbort sehr gut mit einer Isolierglasscheibe überein, welche aus zwei 6 mm dicken Floatglasscheiben bestand. Letztere hatte eine Lichtreflexion von 14,3 % und einen Farbort von a = - 1,0 und b = - 0,7.

### Beispiel II

In der Vakuumbeschichtungsanlage von Beispiel I wurden auf eine Floatglasscheibe wie in Beispiel I unter den gleichen Beschichtungsbedingungen nacheinander folgende Schichten aufgebracht:
- Eine Chromschicht in einer solchen Dicke, daß die Lichtdurchlässigkeit der Floatglasscheibe um 78 % erniedrigt wurde;
- eine SnO₂-Schicht in einer Dicke von 61 nm;
- eine mit SnO₂ dotierte In₂O₃-Schicht in einer Dicke von 4 nm; und
- eine Chromschicht in einer Dicke, daß die Lichtdurchlässigkeit der mit allen vier Schichten versehenen Floatglasscheibe < 1 % war.

Die beschichtete Scheibe wies in der Außenansicht, d. h. bei Betrachtung von der Glasseite, eine Lichtreflexion von 16 % auf. Die Außenansicht war fast neutral mit einer geringfügigen Farbnuance in Richtung blau. Die Farborte in Reflexion lagen bei a = - 0,8 und b = - 5,2.

Bezüglich der Lichtreflexion und der Farbe stimmte die Scheibe sehr gut mit einer Isolierglasscheibe aus zwei 6 mm dicken Floatglasscheiben überein, bei welcher als Sonnenschutzbeschichtung auf der dem Zwischenraum zugewandten Seite der äußeren Scheibe ein Interferenzschichtsystem mit Silber als Wärmereflexionsschicht aufgebracht war. Diese Scheibe hatte eine Lichtdurchlässigkeit von 51 %. Die Lichtreflexion betrug 16 % und die Farborte in Reflexion lagen bei a = - 1,0 und b = - 4,9.

### Beispiel III

In der Vakuum-Beschichtungsanlage von Beispiel I wurden unter den gleichen Beschichtungsbedingungen wie in Beispiel I auf eine Floatglasscheibe wie in Beispiel I nacheinander folgende Schichten aufgebracht:
- Eine Chromschicht in einer solchen Dicke, daß die Lichtdurchlässigkeit der Floatglasscheibe um 53 % erniedrigt wurde;
- eine SnO₂-Schicht in einer Dicke von 34 nm;
- eine mit SnO₂ dotierte In₂O₃-Schicht in einer Dicke von 4 nm; und
- eine Chromschicht in einer Dicke, daß die Lichtdurchlässigkeit der mit allen vier Schichten versehenen Floatglasscheibe < 1 % war.

Die beschichtete Scheibe wies in der Außenansicht, d. h. bei Betrachtung von der Glasseite, einen matten Bronzeton auf. Die Lichtreflexion betrug 16,5 %. Die Farborte in Reflexion lagen bei a = 1,1 und b = 7,2.

Die Scheibe stimmte bezüglich der Lichtreflexion und der Farbe in der Außenansicht sehr gut mit einer Isolierglasscheibe aus zwei 6 mm dicken Floatglasscheiben überein, bei welcher auf der dem Zwischenraum zugewandten Seite der äußeren Scheibe ein Gold-Interferenzschichtsystem aufgebracht war. Die Lichtdurchlässigkeit der Isolierglasscheibe betrug 49 %, die Lichtreflexion 16 % und die Farborte in Reflexion lagen bei a = 1,0 und b = 7,5.

### Beispiel IV

Wie in Beispiel I wurden nacheinander folgende Schichten auf eine Floatglasscheibe aufgebracht:
- Eine Edelstahlschicht in einer solchen Dicke, daß die Lichtdurchlässigkeit der Floatglasscheibe um 79 % erniedrigt wurde;
- eine SnO₂-Schicht in einer Dicke von 59 nm; und
- eine Edelstahlschicht in einer solchen Dicke, daß die Lichtdurchlässigkeit der mit allen drei Schichten versehenen Floatglasscheibe < 1 % betrug.

Die beschichtete Scheibe wies bei Betrachtung von der Glasseite eine Lichtreflexion von 20 % auf. Ihre Außenansicht war fast neutral mit einem leichten Farbstich in Richtung grün. Die Farborte in Reflexion lagen bei a = -2,7 und b = - 0,7.

Bezüglich der Lichtreflexion und der Farbe in der Außenansicht stimmte die Scheibe sehr gut mit einer Isolierglasscheibe aus zwei 6 mm dicken Floatglasscheiben überein, bei welcher auf der dem Zwischenraum zugewandten Seite der äußeren Scheibe als Sonnenschutzbeschichtung eine Chromschicht aufgebracht war. Die Lichtdurchlässigkeit der Isolierglasscheibe betrug 18 %, die Lichtreflexion betrug 22 % und die Farborte in Reflexion lagen bei a = - 3,0 und b = - 0,5.

## Patentansprüche

1. Fassadenplatte, insbesondere zum Verkleiden der Fassade zwischen mit transparenten Glasscheiben, z. B. Isolierglasscheiben, ausgestatteten Fensteröffnungen eines Gebäudes zwecks Erzeugung einer in der Außenansicht optisch einheitlichen Glasfassade, mit einem transparenten Glasträger, der auf seiner Rückseite eine die Außenansicht der Fassadenplatte in Reflexion und Farbton an diejenige der Glasscheiben angleichende Beschichtung mit einer Metalloxidschicht und einer auf diese an der dem Glasträger abgewandten Seite aufgebrachten, im wesentlichen optisch dichten äußeren Schicht aufweist, dadurch gekennzeichnet, daß auf den Glasträger (10) eine als lichtdurchlässige Metall- oder Metallegierungsschicht ausgebildete innere Schicht (12) solcher Dicke aufgebracht ist, daß sie die Lichtdurchlässigkeit des mit ihr beschichteten Glasträgers (10) gegenüber dem unbeschichteten Glasträger (10) um 30 % bis 85 % reduziert; daß die an die innere Schicht (12) anschließende Metalloxidschicht (14) als dielektrische Schicht aus mindestens einem Metalloxid ausgebildet ist und eine optische Dicke im Bereich vom 60 nm bis 180 nm hat; daß die äußere Schicht (10) als derartige Metall- oder Metallegierungsschicht ausgebildet ist, daß die Lichtdurchlässigkeit des fertig beschichteten Glasträgers (10) < 5 % ist und seine Lichtreflexion in der Außenansicht im Bereich von 8 bis 25 % liegt; und daß die für die innere Schicht (12) und die äußere Schicht (10) verwendeten Metalle derart ausgewählt sind, daß das Verhältnis n/k von Realteil n und Imaginärteil k des komplexen Brechungsindexes dieser Schichten zwischen 0,2 und 5 liegt.

2. Fassadenplatte nach Anspruch 1, gekennzeichnet durch eine derartige Dicke der inneren Schicht (12), daß sie die Lichtdurchlässigkeit des mit ihr beschichteten Glasträgers (10) gegenüber dem unbeschichteten Glasträger (10) um 40 % bis 85 % reduziert.

3. Fassadenplatte nach Anspruch 1 oder 2, dadurch gekennzeichnet, daß die optische Dicke der Metalloxidschicht (14) im Bereich von 70 nm bis 140 nm liegt.

4. Fassadenplatte nach einem der vorangehenden Ansprüche, dadurch gekennzeichnet, daß das Material der inneren und/oder der äußeren Schicht (12) zumindest einen überwiegenden Gehalt an mindestens einem Metall oder einer Metallegierung aus der Gruppe der Elemente mit den Ordnungszahlen 22 - 28 und 30 des Periodensystems aufweist.

5. Fassadenplatte nach Anspruch 4, dadurch gekennzeichnet, daß das Material der inneren Schicht (12) und/oder der äußeren Schicht (16) zumindest einen überwiegenden Gehalt an mindestens einem Metall oder einer Metallegierung aus der Gruppe Chrom, Nickel, Eisen und Titan aufweist.

6. Fassadenplatte nach Anspruch 5, dadurch gekennzeichnet, daß die innere Schicht (12) und/oder die äußere Schicht (16) aus Chrom besteht.

7. Fassadenplatte nach Anspruch 5, dadurch gekennzeichnet, daß die innere Schicht (12) und/oder die äußere Schicht (16) aus Edelstahl besteht.

8. Fassadenplatte nach einem der vorangehenden Ansprüche, dadurch gekennzeichnet, daß die Metalloxidschicht (14) aus SnO₂, ZnO, In₂O₃, TiO₂ oder Mischoxiden der entsprechenden Metalle besteht.

9. Fassadenplatte nach einem der vorangehenden Ansprüche, dadurch gekennzeichnet, daß sie zwischen der Metalloxidschicht (14) und der äußeren Schicht (16) eine 2 - 10 nm dicke Haftschicht, insbesondere aus einer Chromnickellegierung oder aus gegebenenfalls dotiertem In₂O₃ aufweist.

10. Fassadenplatte nach einem der vorangehenden Ansprüche, dadurch gekennzeichnet, daß alle Schichten (12, 14, 16) mittels Magnetron-Kathodenzerstäubung aufgebracht sind.

11. Verwendung einer Fassendenplatte nach einem der vorangehenden Ansprüche zum Aufbau einer Glasfassade, bei der im Fensterbereich transparente Glasscheiben mit niedriger Lichtreflexion und schwachem Farbton in der Außenansicht eingesetzt sind.

## Claims

1. A façade panel, more particularly for covering the façade between the window openings of a building provided with transparent glass panes, e.g. insulating glass panes, in order to produce an optically unitary glass façade in external appearance, comprising a transparent glass support having on its back a coating comprising a metal oxide layer, such coating harmonising the external appearance of the facade panel with that of the glass panes in terms of reflection and colour tint, and a substantially optically dense outer layer applied to the coating on the side remote from the glass support, characterised in that an inner layer (12) formed as a light-transmitting metal or metal-alloy layer is applied to the glass support (10) in a thickness such as to reduce the light transmission of the glass support (10) coated with it by 30% to 85% as compared with the uncoated glass support (10); in that the metal oxide layer (14) adjoining the inner layer (12) is formed as a dielectric layer from at least one metal oxide and has an optical thickness in the range from 60 nm to 180 nm; in that the outer layer (10) is formed as a metal or metal-alloy layer such that the light transmission of the finally coated glass support (10) is < 5% and its light reflection in external appearance is in the range from 8 to 25%; and in that the metals used for the inner layer (12) and the outer layer (10) are so selected that the ratio n/k of the real part n and the imaginary part k of the complex refractive index of these layers is between 0.2 and 5.

2. A façade panel according to claim 1, characterised by a thickness of the inner layer (12) such that it reduces the light transmission of the glass support (10) coated with it by 40% to 85% as compared with the uncoated glass support (10).

3. A façade panel according to claim 1 or 2, characterised in that the optical thickness of the metal oxide layer (14) is in the range from 70 nm to 140 nm.

4. A façade panel according to any one of the preceding claims, characterised in that the material of the inner and/or of the outer layer (12) has at least a predominant content of at least one metal or one metal-alloy of the group of elements having numbers 22-28 and and 30 in the periodic system.

5. A façade panel according to claim 4, characterised in that the material of the inner layer (12) and/or of the outer layer (16) has at least a predominant content of at least one metal or one metal-alloy of the group chromium, nickel, iron and titanium.

6. A façade panel according to claim 5, characterised in that the inner layer (12) and/or the outer layer (16) consist of chromium.

7. A façade panel according to claim 5, characterised in that the inner layer (12) and/or the outer layer (16) consist of high-grade steel.

8. A façade panel according to any one of the preceding claims, characterised in that the metal oxide layer (14) consists of SnO₂, ZnO, In₂O₃, TiO₂ or mixed oxides of the corresponding metals.

9. A façade panel according to any one of the preceding claims, characterised in that between the metal oxide layer (14) and the outer layer (16) it has a 2-10 nm thick keying layer, more particularly of a chromium nickel alloy or, if required, doped In₂O₃.

10. A façade panel according to any one of the preceding claims, characterised in that all the layers (12, 14, 16) are applied by magnetron cathode sputtering.

11. Use of a façade panel according to any one of the preceding claims for the construction of a glass façade in which transparent glass panes having a low light reflection and a weak colour tint in external appearance are used in the window area.

## Revendications

1. Panneau de façade, en particulier pour le parement de la façade d'un bâtiment entre des baies équipées de vitres transparentes, par exemple de vitres isolantes, afin d'obtenir une façade en verre d'aspect extérieur optiquement homogène, avec un support de verre transparent, qui présente à l'envers un revêtement adaptant l'aspect extérieur du panneau de façade à celui des vitres quant à la réflexion et à la teinte, avec une couche d'oxyde métallique et une couche extérieure sensiblement optiquement étanche appliquée sur la première couche du côté opposé au support de verre, caractérisé en ce qu'il est appliqué sur le support de verre (10) une couche intérieure (12) réalisée en tant que couche métallique ou en alliage métallique transparente avec une épaisseur telle qu'elle réduit de 30 % à 85 % la transparence du support de verre (10) qu'elle recouvre par rapport au support de verre (10) non revêtu ; en ce que la couche d'oxyde métallique (14) faisant suite à la couche intérieure (12) est réalisée en tant que couche diélectrique faite d'au moins un oxyde métallique et en ce qu'elle a une épaisseur optique située entre 60 nm et 180 nm ; en ce que la couche extérieure (10) est une couche métallique ou en alliage métallique telle que la transparence du support de verre (10) avec le revêtement final est inférieure à 5 % et que sa réflexion de lumière se situe dans la plage de 8 à 25 % quant à l'aspect extérieur ; et en ce que les métaux utilisés pour la couche intérieure (12) et pour la couche extérieure (10) sont choisis de telle manière que le rapport n/k de la partie réelle n et de la partie imaginaire k de l'indice complexe de réfraction de ces couches se situe entre 0,2 et 5.

2. Panneau de façade selon la revendication 1, caractérisé par une épaisseur telle de la couche intérieure (12) qu'elle réduit de 40 % à 85 % la transparence du support de verre (10) qu'elle recouvre par rapport au support de verre (10) non revêtu.

3. Panneau de façade selon la revendication 1 ou 2, caractérisé en ce que l'épaisseur optique de la couche d'oxyde métallique (14) se situe dans la plage de 70 nm à 140 nm.

4. Panneau de façade selon l'une quelconque des revendications précédentes, caractérisé en ce que le matériau de la couche intérieure et/ou de la couche extérieure (12) présente au moins une teneur prédominante en au moins un métal ou un alliage métallique du groupe des éléments ayant les nombres atomiques 22 à 28 et 30 de la classification périodique des éléments.

5. Panneau de façade selon la revendication 4, caractérisé en ce que le matériau de la couche intérieure (12) et/ou de la couche extérieure (16) présente au moins une teneur prédominante ou en au moins un métal ou un alliage métallique du groupe constitué par le chrome, le nickel, le fer et le titane.

6. Panneau de façade selon la revendication 5, caractérisé en ce que la couche intérieure (12) et/ou la couche extérieure (16) se compose(nt) de chrome.

7. Panneau de façade selon la revendication 5, caractérisé en ce que la couche intérieure (12) et/ou la couche extérieure (16) se compose(nt) d'acier fin.

8. Panneau de façade selon l'une quelconque des revendications précédentes, caractérisé en ce que la couche d'oxyde métallique (14) se compose de SnO₂, ZnO, In₂O₃, TiO₂ ou d'oxydes mixtes des métaux correspondants.

9. Panneau de façade selon l'une quelconque des revendications précédentes, caractérisé en ce qu'il présente, entre la couche d'oxyde métallique (14) et la couche extérieure (16), une couche d'accrochage de 2 à 10 nm d'épaisseur, en particulier en un alliage chrome-nickel ou, le cas échéant, en In₂O₃ dopé.

10. Panneau de façade selon l'une quelconque des revendications précédentes, caractérisé en ce que toutes les couches (12, 14, 16) sont déposées par pulvérisation cathodique à magnétron.

11. Utilisation d'un panneau de façade selon l'une quelconque des revendications précédentes pour la constitution d'une façade en verre, dans laquelle la zone des fenêtres présente des vitres transparentes avec une faible réflexion de lumière et une teinte légère quant à l'aspect extérieur.
